# EUROPEAN PATENT SPECIFICATION

(11) **EP 1 744 616 B1**
(45) Date of publication and mention of the grant of the patent: **28.01.2015**
(21) Application number: 05736468.9
(22) Date of filing: 29.04.2005
(51) Int. Cl.: A01J 5/04

(54) **A MILKING DEVICE AND A CONNECTOR MEMBER**
MELKVORRICHTUNG UND VERBINDERGLIED
MACHINE A TRAIRE ET ELEMENT RACCORD

(30) Priority: 13.05.2004 SE 0401240
(43) Date of publication of application: 24.01.2007
(73) Proprietor: DeLaval Holding AB, 147 21 Tumba (SE)
(72) Inventor: WASE, Lars, S-182 56 Danderyd (SE)
(74) Representative: Keijser Bergöö, Malin Katarina
(86) International application number: PCT/SE2005/000629
(87) International publication number: WO 2005/110069

(56) References cited:
- WO-A1-01/19176
- WO-A1-98/28969
- US-B1- 6 397 893

## Description

### THE BACKGROUND OF THE INVENTION AND PRIOR ART

The present invention refers to a milking device including: a milk-transporting conduit, arranged to be attached to a teat of an animal to be milked and to permit the transporting of milk from the teat to a milk-collecting member during a milking state;
a pump device, connected to the milk-transporting conduit and arranged to produce a relatively low pressure for said transporting by sucking milk from the teat to the milk-collecting member via the milk-transporting conduit; and
a gas inlet member for the introduction of a gas into the milk-transporting conduit in order to permit said transporting of milk, wherein the gas inlet member includes a nozzle channel and a passage, which are joined to each other at a common intermediate connection in such a way that the passage enables communication to the surrounding atmosphere and the nozzle channel enables communication to the milk-transporting conduit.

The present invention also refers to a connector member adapted for connecting a first conduit portion of a milk-transporting conduit of a milking device and a second conduit portion the milk-transporting conduit of the milking device, wherein first conduit portion have teat-receiving means and the second conduit portion is connected to the milk-collecting member, wherein the connector member includes a gas inlet member for the introduction of a gas into the milk-transporting conduit in order to permit transporting of milk from the teat-receiving means to the milk-collecting member, wherein the gas inlet member includes a nozzle channel and a passage, which are joined to each other at a common intermediate connection in such a way that the passage enables communication to the surrounding atmosphere and the nozzle channel enables communication to the milk-transporting conduit.

It is known to provide such a milking device with a gas inlet member of this kind. The purpose of such a gas inlet member is to create a flow through the inner space of the milk-transporting conduit in order to enable the transport of the milk. However, it is important to prevent dirt, dust, flies and other particles in the surrounding environment from reaching the milk. It is also important to mix as little air as possible with the milk in order to be able to maintain a high quality of the milk. For these two reasons the total flow area of the gas inlet is made relatively small. One problem in connection with such gas inlet member is that the nozzle channel may become filled up with dirt, dust, milk residuals etc., preventing a continuing flow of air from the surrounding environment to the milk-transporting conduit. This problem may be solved by the provision of a filter, which may be removed and cleaned regularly in order to ensure a proper functioning of the gas inlet member. However, such a separate cleaning operation is time-consuming.

US-A-828,613 discloses a milking device and a connector member of the kind initially defined. The milking device includes a milk-transporting conduit for being attached to a teat of an animal to be milked and for permitting the transport of milk from the teat to a milk-collecting member during a milking state. The milk-transporting conduit is subjected to a relatively low pressure for the transport by sucking milk from the teat to the milk-collecting member via the milk-transporting conduit. A gas inlet member is provided on a connector member, in the form of a so-called claw, for the introduction of air into the milk-transporting conduit. The gas inlet member includes a nozzle channel and a passage, which are joined to each other at an intermediate connection in the form of a cavity. Consequently, the passage enables via a filter communication with the surrounding environment, and the nozzle channel enables communication with the milk-transporting conduit for providing the introduction of air.

WO96/17509 discloses a milking device including a set of teatcups, milk lines connected thereto and means for transporting the milk from the teatcups through the milk lines. Air suction lines are connected to and communicate with a respective one of the teatcups or the milk lines via a small aperture. The air suction line is, according to an embodiment disclosed, connected to a compressor for providing a suitable pressure for the transport of air into the teatcup or the milk line. WO96/17509 also discloses a filter for filtering the air flowing through the air suction line. By such an air supply, dirt from the surrounding environment may thus be prevented from reaching the aperture to the milk line. However, it is still a problem of such a milking device that the aperture can be clogged with the milk, which flows through the teatcup and the milk line.

WO01/19176 discloses another milking device including a teatcup, a milk suction hose connected to the teatcup and means for transporting the milk from the teatcup through the milk suction hose. An aperture is provided on a connector member between the teatcup and the milk suction hose and provides a passage for air from the surrounding to the interior of the milk suction hose. Moreover, a cleaning device is provided for cleaning the aperture and for ensuring the open flow area of the aperture. WO01/19176 discloses different embodiments of the cleaning device, for example an external nozzle for jetting a fluid onto the aperture and an external nozzle for applying a suction effect to the region of the aperture.

### SUMMARY OF THE INVENTION

The object of the present invention is to overcome the problems mentioned above and to provide an improved gas inlet member ensuring a reliable flow of gas to the milk-transporting conduit of a milking device.

This object is achieved by the milking device initially defined, which is characterised in that the gas inlet member also includes an additional conduit, which is joined to the intermediate connection. By means of such an additional conduit, it is possible to provide a fluid to the intermediate connection. Such a fluid may be transported from the intermediate connection to the milk-transporting conduit via the nozzle channel or to the surrounding environment via the passage. The fluid may then be used for cleaning the nozzle channel and/or the passage. Consequently, both the nozzle channel and the passage may be cleaned regularly and frequently without any additional time consuming work. Such cleaning may easily be performed in a non-milking state, i.e. between two successive milking operations. In case the passage is clogged for any reason, e.g. with dirt or milk residues, the fluid may be a gas such as air, which is supplied to the milk-transporting conduit via the additional conduit, the intermediate connection and the nozzle channel for facilitating the milk flow in the milk-transporting conduit during milking of the animal.

According to an embodiment of the invention, the additional conduit is adapted to enable communication between the intermediate connection and a source. Such a source may include a source of the cleaning fluid in the form of a gas or a liquid. The source may also include a pump or a compressor for supplying the cleaning fluid to the intermediate connection at a suitable pressure, e.g. a pressure above the surrounding atmospheric pressure. Furthermore, the source may include a filter for ensuring that the cleaning fluid itself is not contaminated. Such a filter is appropriate for instance in the case that the cleaning fluid is air from the surrounding environment or from the outdoor atmosphere, i.e. the air outside a barn in which the milking device is located. Advantageously, the source may thus be adapted to supply a fluid to the intermediate connection and thus to the nozzle channel. Furthermore, the source may include a pump or a compressor for sucking a fluid from the intermediate connection via the additional conduit. In such manner the nozzle channel and the passage may be cleaned by such flow sucking fluid from the milk-transporting conduit via the nozzle channel and from the surrounding environment via the passage, respectively.

According to a further embodiment of the invention, the intermediate connection is formed by a cavity. Such a cavity may be manufactured in an easy manner. Moreover, the additional conduit may easily be joined to the nozzle channel and the passage via a cavity. The fluid from the additional conduit may be distributed in the cavity in a desired manner to the nozzle channel and the passage.

According to a further embodiment of the invention, the gas inlet member includes a filter member provided in the passage for filtering air entering from the surrounding atmosphere. By such a filter member, the gas, normally air, from the surrounding environment may be cleaned and relieved from any dirt, milk residual or other particles before it is sucked into the milk-transporting conduit via the intermediate connection and the nozzle channel. Thereby, the source may be adapted to supply said fluid to the intermediate connection and thus to the passage and through the filter member for the purpose of cleaning also the filter member. The source may then be adapted to supply said fluid from the source during a non-milking state for the cleaning of the nozzle channel and the filter member. Furthermore, the nozzle channel has a first flow area and the passage through the filter member has a total second flow area, wherein the first flow area is significantly smaller than the second flow area. The flow area of the nozzle channel is thus determining for the quantity of gas, normally air, which is supplied to the milk-transporting conduit from the surrounding environment.

According to a further embodiment of the invention, the passage is defined by a wall and the filter member includes a body having an external wall adapted to abut the wall of the passage when the filter member is provided in the passage, wherein filter channels are formed by a plurality of thin grooves in at least one of the wall of the passage and the external wall. Such a filter member may be manufactured in an easy and inexpensive manner. Advantageously, the wall of the passage is diverging along a centre axis of the passage from the intermediate connection to the surrounding environment.

According to a further embodiment of the invention, the body is formed by an elastic ring provided to be partly engaged in the passage, wherein the filter channels are formed by a plurality of thin grooves in the wall of the passage. This is a particularly simple embodiment according to which a conventional O-ring for instance may be used to cover the passage but leaving the thin grooves in the wall of the passage free.

According to a further embodiment of the invention, the milk transporting conduit includes a first conduit portion having teat-receiving means and a second conduit portion connected to the milk-collecting member, wherein the milking device includes a connector member connecting the first conduit member and the second conduit member to each other. Such a connector member is usually employed in a milking device including a separate milk-transporting conduit for each teatcup. According to this embodiment, the gas inlet member is provided in the connector member. The elastic ring may advantageously extend around the connector member, preferably in a peripheral groove extending around substantially the whole periphery of the connector member.

The object is also achieved by the connector member initially defined, which is characterised in that the gas inlet member also includes an additional conduit, which is joined to the intermediate connection.

Preferred embodiments of the connector member are defined in claims 17 to 28.

### BRIEF DESCRIPTION OF THE DRAWINGS

The present invention is now to be explained more closely by means of the description of various embodiments and with reference to the drawings attached hereto.
- Fig 1: discloses schematically a milking device according to the present invention.
- Figs 2-4: disclose schematically a first embodiment of a connector member of the milking device in Fig 1.
- Figs 5-7: disclose schematically a second embodiment of a connector member of the milking device in Fig 1.
- Fig 8: discloses schematically a third embodiment of a connector member of the milking device in Fig 1.

### DETAILED DESCRIPTION OF VARIOUS EMBODIMENTS OF THE INVENTION

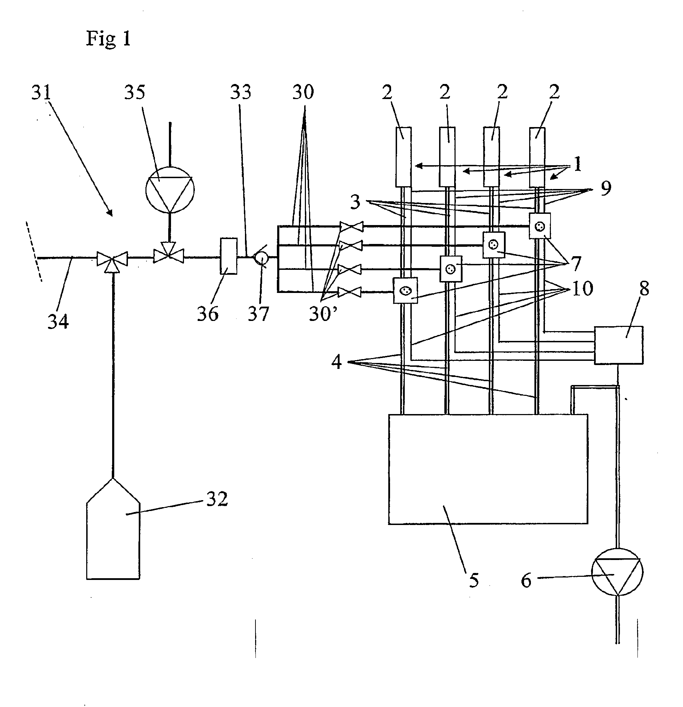

Fig 1 discloses a milking device for milking an animal such as cows. The invention is not limited to milking of cows but may also be applied to milking of other animals such as goats, sheep, horses, buffaloes etc.

The milking device includes four milk-transporting conduits 1, each including teat-receiving means in the form of a teatcup 2, a first conduit portion 3 and a second conduit portion 4. Each teatcup 2 is arranged at an end of a respective first conduit portion 3. Each teatcup 2 is adapted to be attached to a teat of the animal to be milked. Each of the second conduit portions 4 of the respective milk-transporting conduit 1 is connected to a milk-collecting member 5. The milk-transporting conduit 1 is thus arranged to permit the transporting of milk from the teat to the milk-collecting member 5 during a milking state. The milk-transporting conduit 1 may include further devices, such as e.g. a milk meter, a milk quality sensor etc.

A pump device, in the following a vacuum pump 6, is also connected to the milk-transporting conduit 1 via the milk-collecting member 5 and arranged to produce a relatively low first pressure in the milk-collecting member 5 and the milk-transporting conduits 1. Consequently, the milk is transported in a conventional manner by being sucked from the teats to the milk-collecting member 5 via the teatcups 2 and the milk-transporting conduit 1. From the milk-collecting member 5, the milk may then be conveyed in a conventional manner to a milk tank (not disclosed) or any other suitable storing means.

In the embodiment disclosed in Fig 1, the first conduit portion 3 is connected to the respective second conduit portion 4 by means of a connector member 7, which forms a part of the milk-transporting conduit 1. The connector member 7 will be described more closely below. Each teatcup 2 also has an inner space (not shown) for receiving the respective teat. The inner space is formed by the teatcup liner which may be a part of the first conduit member 3 and which extends into a shell of the teatcup in a manner known per se. Furthermore, a pulsation chamber (not shown) is formed in each teacup 2 between the shell and the teatcup liner. The pulsation chamber is connected to a pulsator 8 via a short pulse conduit 9 and a long pulse conduit 10. The short pulse conduit 9 and the long pulse conduit 10 are also connected to each other by means of the connector member 7. The pulsator 8 provides a pulsating pressure to the pulsation chambers in a manner know per se.

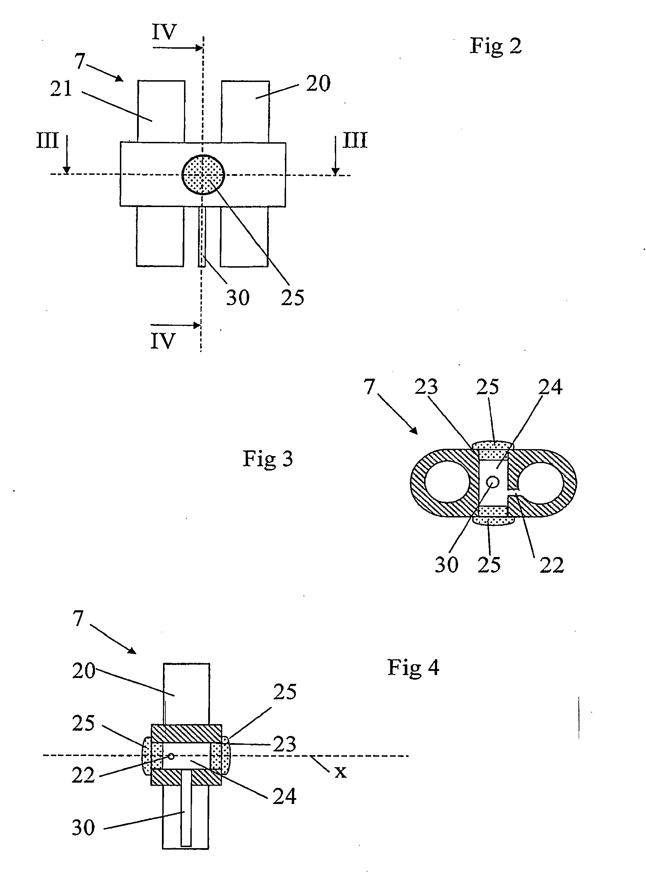

Different embodiments of the connector member 7 are disclosed in Figs 2 - 8. Each connector member 7 includes milk connecting pipe 20 for connecting the first conduit portion 3 and the second conduit portion 4 to each other, and a pulse connecting pipe 21 for connecting the short pulse conduit 9 and the long pulse conduit 10 to each other. With such an arrangement the first conduit portion 3 including or forming the teatcup liner may in an easy manner be replaced by the farmer after a determined period of time or operation.

In order to obtain a flow of gas and milk in the milktransporting conduits 1, each milk-transporting conduit 1 includes a gas inlet member for the introduction of gas into the respective milk-transporting conduit 1. The gas inlet member is advantageously provided in the proximity of the teat tip. In the embodiments disclosed, the respective gas inlet member is provided in the connector member 7.

Each gas inlet member for the introduction of a gas into the milk-transporting conduit 1 includes a nozzle channel 22 and a passage 23, which are joined to each other at a common intermediate connection 24. The passage 23 enables communication between the surrounding atmosphere and the intermediate connection 24. The nozzle channel 22 enables communication between the intermediate connection 24 and the milk-transporting conduit 1. Thus the gas inlet member permits gas, in the embodiments disclosed air, from the surrounding atmosphere to enter the milk-transporting conduit 1 via the passage 23, the intermediate connection 24 and the nozzle channel 22.

In the embodiments disclosed, the intermediate connection 24 is formed by a cavity or a chamber provided in the connector member 7. The cavity or chamber is, in the embodiments disclosed, formed by a through-going central hole in the connector member 7. Consequently, there are two passages 23 between the intermediate connection 24 and the surrounding atmosphere. In order to clean the air to be delivered to the milk-transporting conduit 1 one, two or more filter members 25 may be provided. In the embodiment disclosed in Figs 2 - 4, two filter members 25 are provided, one for each passage 23. Each filter member 25 includes a filter body, which is introduced into the respective passage 23, i.e. at the respective ends of the through-going intermediate connection 24. The filter members 25 may be of any suitable kind being able to relieve the surrounding air to be supplied to the milk-transporting conduit 1 from dirt, dust, flies, microorganisms and any other small particles.

The nozzle channel 22 forms an aperture with a predetermined first flow area ensuring a uniform flow of air through the nozzle channel 22 into the milk-transporting conduit 1. The passages 23 through the filter members 25 have a total second flow area, which is determined by the flow channels through the filter members 25. The first flow area of the nozzle channel 25 is significantly smaller than the second flow area. Each single flow channel area of the filter is suitably smaller than the first flow area.

The gas inlet member also includes an additional conduit 30, which is joined to the intermediate connection 24. The additional conduit 30 thus enables communication to the intermediate connection 24, i.e. transporting a fluid to or from the cavity of the intermediate connection 24. In the embodiment disclosed in Fig 1, the additional conduit 30 enables supply of a fluid from a source 31 including a container 32 during a non-milking state. Each additional conduit 30 may include an openable valve 30', which is open during cleaning, and may be closed during milking for preventing cross-flow of air. The additional conduits 30 are joined to each other to form a common additional conduit 33 at a distance from the connector members 7, wherein the common additional conduit 33 is connected to the source 31.

The container 32 may contain a cleaning fluid in the form of a liquid or a gas. The source 31 may also be realised by the supply of clean water from the general water network, which is indicated by the conduit 34. By means of the conduit 34 it is also possible to supply any suitable gas to the intermediate connection 24, wherein the gas may be pressurised. The source 31 may also include a compressor 35 or a pump for delivering a gas, such as air, via the additional conduit 30 at a desired pressure. In case that the fluid is a gas used for cleaning the nozzle channel 22 and the filter member 25, the pressure of the fluid is suitably higher than the surrounding atmospheric pressure. Furthermore, the source 31 may include a filter 36 for filtering the fluid to be delivered. Such a filter 36 is advantageous in case the fluid is air taken from the surrounding environment. A one-way valve 37 may also be included in the source 31 or the common additional conduit 33 in order to prevent back-flow of the fluid.

It is to be noted that the compressor 35 may also be arranged to provide a flow from the connector members 7 via the respective additional conduits 30 during a non-milking state in order to clean the passages 23 and the filter members 25, and the nozzle channels 22. In such an embodiment the one-way valve 37 and the filter 36 may be dispensed with.

Furthermore, the compressor 35 may be used to supply a gas, such as air, to the connector members 7 during a milking state in order to enable an efficient milk flow in the milk-transporting conduits 1. Such a possibility is advantageous in the case that the filter members 25 have been clogged or obstructed in any other way.

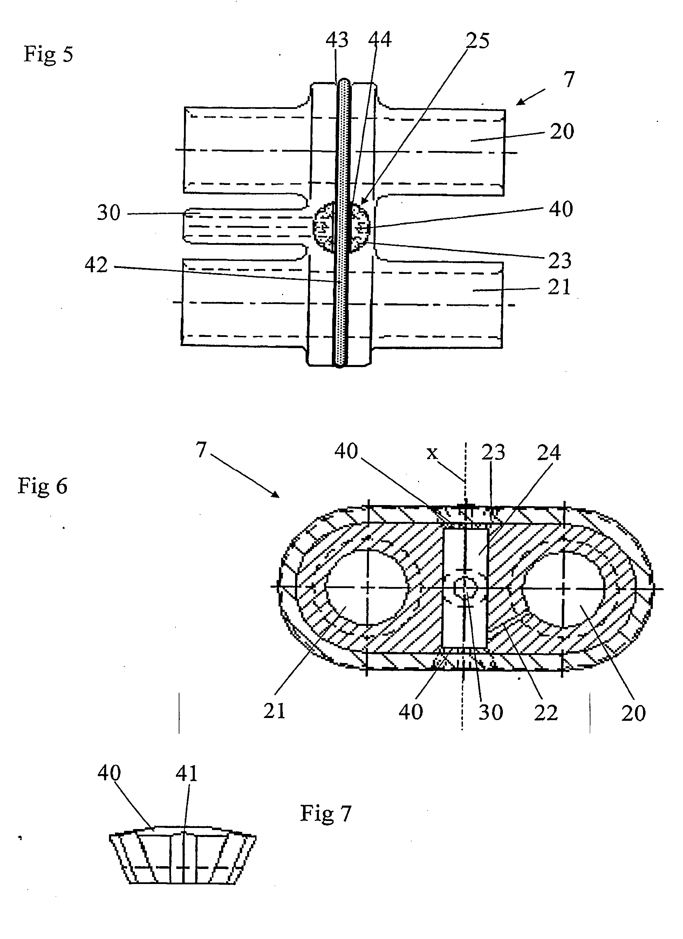

Figs 5 - 7 disclose a second embodiment of the connector member 7. The second embodiment differs from the first embodiment in the design of the filter members 25. In the second embodiment, each filter member 25 includes a body 40, see Fig 7. The body 40 is provided in the passage 23. The passage 23 is defined by a wall extending around the periphery of the passage 23. The wall of the passage 23 is diverging along a centre axis x of the passage 23 from the intermediate connection 24 to the surrounding environment. In the embodiment disclosed, the wall of the passage 23 has a conical shape. It is to be noted that the passage 13 also may have any other suitable shape, e.g. a cylindrical shape. The body 40 has an external wall having a corresponding conical shape and being adapted to abut the wall of the passage 23. The external wall of the body 40 is provided with a number of thin groove 41 forming filter channels when the body is provided in the passage 23 to abutment against the wall of the passage 23. It is to be noted that the grooves 41 as an alternative may be provided in the wall of the passage 23, compare also the third embodiment. The bodies 40 are maintained in their respective position in the passages 23 by means of an elastic ring 42, for instance an elastic O-ring, a spring element, an elastic band, an elastic element, such as a rubber band, extending in the intermediate connection 24 between the two filters 25. The elastic ring 42 is provided in a peripheral groove 43 extending around substantially the whole periphery of the connector member 7. Each body 40 also includes an upper groove 44 for receiving the elastic ring 42. The grooves 44 are aligned with the groove 43 when the bodies 40 are provided in the passages 23.

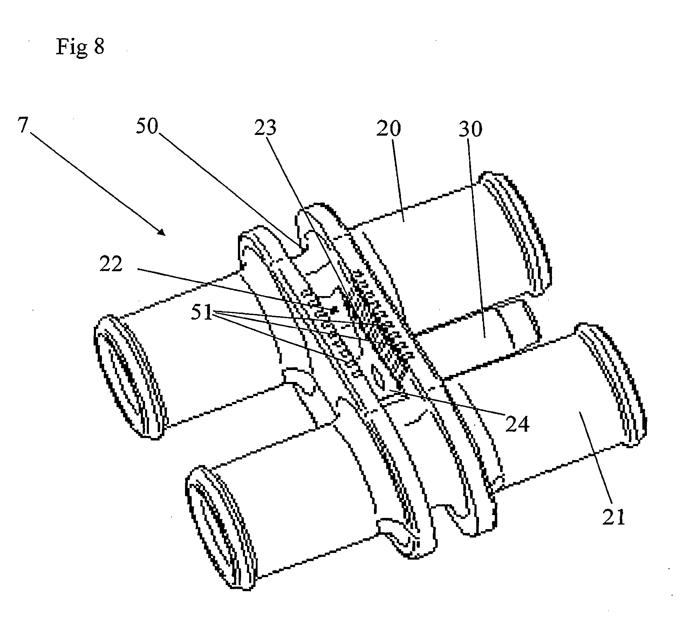

Fig 8 discloses a third embodiment of the connector member 7. The third embodiment differs from the first and second embodiments in the design of the filter members 25. In the third embodiment, each filter member 25 includes a peripheral groove 50 extending around substantially the whole periphery of the connector member 7. Each passage 23 to the through-going intermediate connection 24 is formed by two opposite walls of the groove 50. The walls of the passage 23 are diverging along a centre axis of the passage 23 from the intermediate connection 24 to the surrounding environment. In each wall there is provided a plurality of thin grooves 51. The filter member 25 also includes a body in the form of an elastic ring 42, e.g. an elastic O-ring of the kind disclosed in the second embodiment. When the elastic ring 42 is positioned in the groove 50 to abutment against the opposite walls, the thin grooves 51 will form filter channels. The third embodiment is thus particularly simple and easy to handle since merely an elastic ring 42, such as a conventional O-ring, is needed to complete the filter member 25.

The filter member 25 in both the second and the third embodiments may easily be cleaned by a fluid under pressure from the intermediate connection 24, since the pressure may lift the bodies 40, 42 from the respective wall of the passages 23.

The present invention is not limited to the embodiments disclosed but may be varied and modified within the scope of the claims attached hereto. It should be noted that the connector member also could be designed as a so-called claw, which collects the milk from each teat via the respective first conduit portion. The milk collected in the claw may then be transported to the milk-collecting member 5 via a common single second conduit. The gas inlet member may then be provided in the claw. It is also to be noted that the gas inlet member may be provided at another position than disclosed above, for instance in the respective first conduit portion 3. It is also to be noted that the intermediate connection 24 does not necessarily need to have a physical extension in the form of a cavity or a chamber in addition to the physical extension of the additional conduit 30, the passage 23 and the nozzle channel 22 where the connect to each other.

## Claims

1. A milking device including:
a milk-transporting conduit (1), arranged to be attached to a teat of an animal to be milked and to permit the transporting of milk from the teat to a milk-collecting member (5) during a milking state;
a pump device (6), connected to the milk-transporting conduit (1) and arranged to produce a relatively low pressure for said transporting by sucking milk from the teat to the milk-collecting member (5) via the milk-transporting conduit (1); and
a gas inlet member for the introduction of a gas into the milk-transporting conduit (1) in order to permit said transporting of milk, wherein the gas inlet member includes a nozzle channel (22) and a passage (23), which are joined to each other at a common intermediate connection (24) in such a way that the passage (23) enables communication to the surrounding atmosphere and the nozzle channel (22) enables communication to the milk-transporting conduit (1),
**characterised in that** the gas inlet member also includes an additional conduit (30), which is joined to the intermediate connection (24).

2. A milking device according to claim 1, **characterised in that** the additional conduit (30) is adapted to enable communication between the intermediate connection (24) and a source (31).

3. A milking device according to claim 2, **characterised in that** the source (31) is adapted to supply a fluid to the intermediate connection (24) and thus to the nozzle channel (22).

4. A milking device according to any one of the preceding claims, **characterised in that** the intermediate connection (24) is formed by a cavity.

5. A milking device according to any one of the preceding claims, **characterised in that** the gas inlet member includes at least one filter member (25) provided in the passage (23) for filtering air entering from the surrounding atmosphere.

6. A milking device according to claims 2 and 5, **characterised in that** the source (31) is adapted to supply said fluid to the intermediate connection (24) and thus to the passage (23) and through the filter member (25).

7. A milking device according to claims 3 and 6, **characterised in that** the source (31) is adapted to supply said fluid from the source during a non-milking state for cleaning of the nozzle channel (22) and/or the filter member (25).

8. A milking device according to any one of claims 5 to 7, **characterised in that** the nozzle channel (22) has a first flow area and the passage (23) through the filter member (25) has a total second flow area, wherein the first flow area is significantly smaller than the second flow area.

9. A milking device according to any one of claims 5 to 8, **characterised in that** the passage (23) is defined by a wall and that the filter member (25) includes a body (40, 42) having an external wall adapted to abut the wall of the passage (23), wherein filter channels are formed by a plurality of thin grooves (41, 51) in at least one of the wall of the passage (23) and the external wall.

10. A milking device according to claim 9, **characterised in that** the wall of the passage (23) is diverging along a centre axis (x) of the passage from the intermediate connection (24) to the surrounding environment.

11. A milking device according to any one of claims 9 and 10, **characterised in that** the body (40, 42) is formed by an elastic ring (42) provided to be partly engaged in the passage (23), wherein the filter channels are formed by a plurality of thin grooves (51) in the wall of the passage (23).

12. A milking device according to any one of the preceding claims, **characterised in that** the milk transporting conduit (1) includes a first conduit portion (3) having teat-receiving means and a second conduit portion (4) connected to the milk-collecting member (5), wherein the milking device includes a connector member (7) connecting the first conduit member (3) and the second conduit member (4) to each other.

13. A milking device according to claim 12, **characterised in that** the gas inlet member is provided in the connector member (7).

14. A milking device according to claims 11 and 13, **characterised in that** the elastic ring (42) extends around the connector member (7).

15. A milking device according to claim 14, **characterised in that** the elastic ring (42) is provided in a peripheral groove (44, 50) extending around substantially the whole periphery of the connector member (7).

16. A connector member (7) adapted for connecting a first conduit (3) portion of a milk-transporting conduit (1) of a milking device and a second conduit portion (4) of the milk-transporting conduit (1) of the milking device, wherein the first conduit portion (3) has teat-receiving means and the second conduit portion is connected to a milk-collecting member (5), wherein the connector member (7) includes a gas inlet member for the introduction of a gas into the milk-transporting conduit (1) in order to permit transporting of milk from the teat-receiving means (2) to the milk-collecting member (5), wherein the gas inlet member includes a nozzle channel (22) and a passage (23), which are joined to each other at a common intermediate connection (24) in such a way that the passage (23) enables communication to the surrounding atmosphere and the nozzle channel (22) enables communication to the milk-transporting conduit (1), **characterised in that** the gas inlet member also includes an additional conduit (30), which is joined to the intermediate connection (24).

17. A connector member according to claim 16, **characterised in that** the additional conduit (30) is adapted to enable communication between the intermediate connection (24) and a source (31).

18. A connector member according to claim 17, **characterised in that** the source (31) is adapted to supply a fluid to the intermediate connection (24) and thus to the nozzle channel (22).

19. A connector member according to any one of claims 16 to 18, **characterised in that** the intermediate connection (24) is formed by a cavity.

20. A connector member device according to any one of claims 16 to 19, **characterised in that** the gas inlet member includes a filter member (25) provided in the passage (23) for filtering air entering from the surrounding atmosphere.

21. A connector member according to claims 17 and 20, **characterised in that** the source (31) is adapted to supply said fluid to the intermediate connection (24) and thus to the passage (23) and through the filter member (25).

22. A connector member according to claims 18 and 21, **characterised in that** the source (31) is adapted to supply said fluid from the source during a non-milking state for cleaning of the nozzle channel (22) and the filter member (25).

23. A connector member according to any one of claims 20 to 22, **characterised in that** the nozzle channel (22) has a first flow area and the passage (23) through the filter member (25) has a total second flow area, wherein the first flow area is significantly smaller than the second flow area.

24. A connector member according to any one of claims 20 to 23, **characterised in that** the passage (23) is defined by wall and that the filter member (25) includes a body (40, 42) having an external wall adapted to abut the wall of the passage (23), wherein filter channels are formed by a plurality of thin grooves (44, 51) in at least one of the wall of the passage (23) and the external wall.

25. A connector member according to claim 24, **characterised in that** the wall of the passage (23) is diverging along a centre axis (x) of the passage from the intermediate connection (24) to the surrounding environment.

26. A connector member according to any one of claims 24 and 25, **characterised in that** the body (40, 42) is formed by an elastic ring (42) provided to be partly engaged in the passage (23), wherein the filter channels are formed by a plurality of thin grooves (51) in the wall of the passage (23).

27. A connector member according to claim 26, **characterised in that** the elastic ring (42) extends around the connector member (7).

28. A connector member according to claim 27, **characterised in that** the elastic ring (42) is provided in a peripheral groove (43, 50) extending around substantially the whole periphery of the connector member (7).

## Patentansprüche

1. Melkvorrichtung, aufweisend:
eine Milchtransportleitung (1), die so angeordnet ist, dass sie an einer Zitze eines zu melkenden Tiers befestigt wird und sie den Transport von Milch während eines Melkzustands von der Zitze zu einem Milchsammelelement (5) erlaubt;
eine Pumpvorrichtung (6), die an die Milchtransportleitung (1) angeschlossen und so angeordnet ist, dass sie einen relativ geringen Druck für den Transport erzeugt, indem Milch aus der Zitze zu dem Milchsammelelement (5) über die Milchtransportleitung (1) gesaugt wird; und
ein Gaseintrittselement zum Einleiten eines Gases in die Milchtransportleitung (1) zur Ermöglichung des Transports von Milch, wobei das Gaseintrittselement einen Düsenkanal (22) und einen Durchgang (23) aufweist, die miteinander an einer gemeinsamen Zwischenverbindung (24) derart verbunden sind, dass der Durchgang (23) die Verbindung zur umgebenden Atmosphäre ermöglicht und der Düsenkanal (22) die Verbindung zur Milchtransportleitung (1) ermöglicht,
**dadurch gekennzeichnet, dass** das Gaseintrittselement auch eine zusätzliche Leitung (30) aufweist, die mit der Zwischenverbindung (24) verbunden ist.

2. Melkvorrichtung nach Anspruch 1, **dadurch gekennzeichnet, dass** die zusätzliche Leitung (30) so ausgelegt ist, dass sie die Verbindung zwischen der Zwischenverbindung (24) und einer Quelle (31) ermöglicht.

3. Melkvorrichtung nach Anspruch 2, **dadurch gekennzeichnet, dass** die Quelle (31) so ausgelegt ist, dass sie der Zwischenverbindung (24) und folglich dem Düsenkanal (22) ein Fluid zuführt.

4. Melkvorrichtung nach einem der vorhergehenden Ansprüche, **dadurch gekennzeichnet, dass** die Zwischenverbindung (24) durch einen Hohlraum geformt ist.

5. Melkvorrichtung nach einem der vorhergehenden Ansprüche, **dadurch gekennzeichnet, dass** das Gaseintrittselement mindestens ein Filterelement (25) aufweist, das in dem Durchgang (23) zum Filtern von Luft, die aus der umgebenden Atmosphäre einströmt, vorgesehen ist.

6. Melkvorrichtung nach Anspruch 2 und 5, **dadurch gekennzeichnet, dass** die Quelle (31) so ausgelegt ist, dass sie der Zwischenverbindung (24) und folglich dem Durchgang (23) und durch das Filterelement (25) das Fluid zuführt.

7. Melkvorrichtung nach Anspruch 3 und 6, **dadurch gekennzeichnet, dass** die Quelle (31) so ausgelegt ist, dass sie das Fluid zum Reinigen des Düsenkanals (22) und/oder des Filterelements (25) während eines Nicht-Melkzustands aus der Quelle zuführt.

8. Melkvorrichtung nach einem der Ansprüche 5 bis 7, **dadurch gekennzeichnet, dass** der Düsenkanal (22) einen ersten Strömungsquerschnitt aufweist und der Durchgang (23) durch das Filterelement (25) einen zweiten Strömungsgesamtquerschnitt aufweist, wobei der erste Strömungsquerschnitt wesentlich kleiner als der zweite Strömungsquerschnitt ist.

9. Melkvorrichtung nach einem der Ansprüche 5 bis 8, **dadurch gekennzeichnet, dass** der Durchgang (23) durch eine Wand definiert ist und dass das Filterelement (25) einen Körper (40, 42) mit einer Außenwand aufweist, die so ausgelegt ist, dass sie an die Wand des Durchgangs (23) anstößt, wobei durch eine Vielzahl von dünnen Rillen (41, 51) in der Wand des Durchgangs (23) und/oder der Außenwand Filterkanäle gebildet sind.

10. Melkvorrichtung nach Anspruch 9, **dadurch gekennzeichnet, dass** die Wand des Durchgangs (23) entlang einer Mittelachse (x) des Durchgangs von der Zwischenverbindung (24) zur umgebenden Umgebung auseinanderläuft.

11. Melkvorrichtung nach einem der Ansprüche 9 und 10, **dadurch gekennzeichnet, dass** der Körper (40, 42) durch einen elastischen Ring (42) geformt ist, der so vorgesehen ist, dass er in den Durchgang (23) teilweise eingreift, wobei die Filterkanäle durch eine Vielzahl von dünnen Rillen (51) in der Wand des Durchgangs (23) gebildet sind.

12. Melkvorrichtung nach einem der vorhergehenden Ansprüche, **dadurch gekennzeichnet, dass** die Milchtransportleitung (1) einen ersten Leitungsabschnitt (3) mit Zitzenaufnahmemitteln und einen zweiten Leitungsabschnitt (4) aufweist, der mit dem Milchsammelelement (5) verbunden ist, wobei die Melkvorrichtung ein Verbinderglied (7) aufweist, das das erste Leitungselement (3) und das zweite Leitungselement (4) miteinander verbindet.

13. Melkvorrichtung nach Anspruch 12, **dadurch gekennzeichnet, dass** das Gaseintrittselement in dem Verbinderglied (7) vorgesehen ist.

14. Melkvorrichtung nach Anspruch 11 und 13, **dadurch gekennzeichnet, dass** der elastische Ring (42) um das Verbinderglied (7) herum verläuft.

15. Melkvorrichtung nach Anspruch 14, **dadurch gekennzeichnet, dass** der elastische Ring (42) in einer Umfangsnut (44, 50) angeordnet ist, die um im Wesentlichen den gesamten Umfang des Verbinderglieds (7) verläuft.

16. Verbinderglied (7), das so ausgelegt ist, dass es einen ersten Leitungsabschnitt (3) einer Milchtransportleitung (1) einer Melkvorrichtung und einen zweiten Leitungsabschnitt (4) der Milchtransportleitung (1) der Melkvorrichtung verbindet, wobei der erste Leitungsabschnitt (3) Zitzenaufnahmemittel aufweist und der zweite Leitungsabschnitt mit einem Milchsammelelement (5) verbunden ist, wobei das Verbinderglied (7) ein Gaseintrittselement zum Einleiten eines Gases in die Milchtransportleitung (1) aufweist, zur Ermöglichung des Transports von Milch von den Zitzenaufnahmemitteln (2) zu dem Milchsammelelement (5), wobei das Gaseintrittselement einen Düsenkanal (22) und einen Durchgang (23) aufweist, die miteinander an einer gemeinsamen Zwischenverbindung (24) derart verbunden sind, dass der Durchgang (23) die Verbindung zur umgebenden Atmosphäre ermöglicht und der Düsenkanal (22) die Verbindung zur Milchtransportleitung (1) ermöglicht, **dadurch gekennzeichnet, dass** das Gaseintrittselement auch eine zusätzliche Leitung (30) aufweist, die mit der Zwischenverbindung (24) verbunden ist.

17. Verbinderglied nach Anspruch 16, **dadurch gekennzeichnet, dass** die zusätzliche Leitung (30) so ausgelegt ist, dass sie die Verbindung zwischen der Zwischenverbindung (24) und einer Quelle (31) ermöglicht.

18. Verbinderglied nach Anspruch 17, **dadurch gekennzeichnet, dass** die Quelle (31) so ausgelegt ist, dass sie der Zwischenverbindung (24) und folglich dem Düsenkanal (22) ein Fluid zuführt.

19. Verbinderglied nach einem der Ansprüche 16 bis 18, **dadurch gekennzeichnet, dass** die Zwischenverbindung (24) durch einen Hohlraum geformt ist.

20. Verbindergliedvorrichtung nach einem der Ansprüche 16 bis 19, **dadurch gekennzeichnet, dass** das Gaseintrittselement ein Filterelement (25) aufweist, das in dem Durchgang (23) zum Filtern von Luft, die aus der umgebenden Atmosphäre einströmt, vorgesehen ist.

21. Verbinderglied nach Anspruch 17 und 20, **dadurch gekennzeichnet, dass** die Quelle (31) so ausgelegt ist, dass sie der Zwischenverbindung (24) und folglich dem Durchgang (23) und durch das Filterelement (25) das Fluid zuführt.

22. Verbinderglied nach Anspruch 18 und 21, **dadurch gekennzeichnet, dass** die Quelle (31) so ausgelegt ist, dass sie das Fluid zum Reinigen des Düsenkanals (22) und/oder des Filterelements (25) während eines Nicht-Melkzustands aus der Quelle zuführt.

23. Verbinderglied nach einem der Ansprüche 20 bis 22, **dadurch gekennzeichnet, dass** der Düsenkanal (22) einen ersten Strömungsquerschnitt aufweist und der Durchgang (23) durch das Filterelement (25) einen zweiten Strömungsgesamtquerschnitt aufweist, wobei der erste Strömungsquerschnitt wesentlich kleiner als der zweite Strömungsquerschnitt ist.

24. Verbinderglied nach einem der Ansprüche 20 bis 23, **dadurch gekennzeichnet, dass** der Durchgang (23) durch eine Wand definiert ist und dass das Filterelement (25) einen Körper (40, 42) mit einer Außenwand aufweist, die so ausgelegt ist, dass sie an die Wand des Durchgangs (23) anstößt, wobei durch eine Vielzahl von dünnen Rillen (44, 51) in der Wand des Durchgangs (23) und/oder der Außenwand Filterkanäle gebildet sind.

25. Verbinderglied nach Anspruch 24, **dadurch gekennzeichnet, dass** die Wand des Durchgangs (23) entlang einer Mittelachse (x) des Durchgangs von der Zwischenverbindung (24) zur umgebenden Umgebung auseinanderläufk.

26. Verbinderglied nach einem der Ansprüche 24 und 25, **dadurch gekennzeichnet, dass** der Körper (40, 42) durch einen elastischen Ring (42) geformt ist, der so vorgesehen ist, dass er in den Durchgang (23) teilweise eingreift, wobei die Filterkanäle durch eine Vielzahl von dünnen Rillen (51) in der Wand des Durchgangs (23) gebildet sind.

27. Verbinderglied nach Anspruch 26, **dadurch gekennzeichnet, dass** der elastische Ring (42) um das Verbinderglied (7) herum verläuft.

28. Verbinderglied nach Anspruch 27, **dadurch gekennzeichnet, dass** der elastische Ring (42) in einer Umfangsnut (43, 50) angeordnet ist, die um im Wesentlichen den gesamten Umfang des Verbinderglieds (7) verläuft.

## Revendications

1. Machine à traire comportant :
un conduit de transport de lait (1), agencé pour être fixé à un trayon d'un animal à traire et pour permettre le transport de lait du trayon à un élément de collecte de lait (5) pendant un état de traite ;
un dispositif de pompe (6), relié au conduit de transport de lait (1) et agencé pour générer une pression relativement basse pour ledit transport en aspirant du lait du trayon à l'élément de collecte de lait (5) par l'intermédiaire du conduit de transport de lait (1) ; et
un élément d'entrée de gaz destiné à l'introduction d'un gaz dans le conduit de transport de lait (1) afin de permettre ledit transport de lait, l'élément d'entrée de gaz comportant un canal de buse (22) et un passage (23), qui sont reliés l'un à l'autre à un raccordement intermédiaire commun (24) de telle manière que le passage (23) permet la communication avec l'atmosphère environnante et le canal de buse (22) permet la communication avec le conduit de transport de lait (1),
**caractérisée en ce que** l'élément d'entrée de gaz comporte également un conduit supplémentaire (30), qui est relié au raccordement intermédiaire (24).

2. Machine à traire selon la revendication 1, **caractérisée en ce que** le conduit supplémentaire (30) est adapté pour permettre la communication entre le raccordement intermédiaire (24) et une source (31).

3. Machine à traire selon la revendication 2, **caractérisée en ce que** la source (31) est adaptée pour alimenter un fluide dans le raccordement intermédiaire (24) et ainsi dans le canal de buse (22).

4. Machine à traire selon l'une quelconque des revendications précédentes, **caractérisée en ce que** le raccordement intermédiaire (24) est formé par une cavité.

5. Machine à traire selon l'une quelconque des revendications précédentes, **caractérisée en ce que** l'élément d'entrée de gaz comporte au moins un élément de filtre (25) situé dans le passage (23) pour filtrer l'air entrant de l'atmosphère environnante.

6. Machine à traire selon les revendications 2 et 5, **caractérisée en ce que** la source (31) est adaptée pour alimenter ledit fluide dans le raccordement intermédiaire (24) et ainsi dans le passage (23) et à travers l'élément de filtre (25).

7. Machine à traire selon les revendications 3 et 6, **caractérisée en ce que** la source (31) est adaptée pour alimenter ledit fluide de la source pendant un état de non traite pour nettoyer le canal de buse (22) et/ou l'élément de filtre (25).

8. Machine à traire selon l'une quelconque des revendications 5 à 7, **caractérisée en ce que** le canal de buse (22) présente une première section de passage et le passage (23) à travers l'élément de filtre (25) présente une seconde section de passage totale, la première section de passage étant sensiblement plus petite que la seconde section de passage.

9. Machine à traire selon l'une quelconque des revendications 5 à 8, **caractérisée en ce que** le passage (23) est défini par une paroi et **en ce que** l'élément de filtre (25) comporte un corps (40, 42) présentant une paroi extérieure adaptée pour appuyer contre la paroi du passage (23), des canaux de filtre étant formés par une pluralité de fines rainures (41, 51) dans au moins soit la paroi du passage (23) soit la paroi extérieure.

10. Machine à traire selon la revendication 9, **caractérisée en ce que** la paroi du passage (23) diverge le long d'un axe central (x) du passage du raccordement intermédiaire (24) au milieu environnant.

11. Machine à traire selon l'une quelconque des revendications 9 et 10, **caractérisée en ce que** le corps (40, 42) est formé par un anneau élastique (42) prévu pour être partiellement en prise dans le passage (23), les canaux de filtre étant formés par une pluralité de fines rainures (51) dans la paroi du passage (23).

12. Machine à traire selon l'une quelconque des revendications précédentes, **caractérisée en ce que** le conduit de transport de lait (1) comporte une première partie de conduit (3) présentant des moyens de réception de trayon et une seconde partie de conduit (4) raccordée à l'élément de collecte de lait (5), la machine à traire comportant un élément raccord (7) raccordant le premier élément de conduit (3) et le second élément de conduit (4) l'un à l'autre.

13. Machine à traire selon la revendication 12, **caractérisée en ce que** l'élément d'entrée de gaz est situé dans l'élément raccord (7).

14. Machine à traire selon les revendications 11 et 13, **caractérisée en ce que** l'anneau élastique (42) s'étend autour de l'élément raccord (7).

15. Machine à traire selon la revendication 14, **caractérisée en ce que** l'anneau élastique (42) est situé dans une rainure périphérique (44, 50) s'étendant autour d'essentiellement toute la périphérie de l'élément raccord (7).

16. Élément raccord (7) adapté pour raccorder une première partie de conduit (3) d'un conduit de transport de lait (1) d'une machine à traire et une seconde partie de conduit (4) du conduit de transport de lait (1) de la machine à traire, dans lequel la première partie de conduit (3) présente des moyens de réception de trayon et la seconde partie de conduit est raccordée à un élément de collecte de lait (5), l'élément raccord (7) comportant un élément d'entrée de gaz pour l'introduction d'un gaz dans le conduit de transport de lait (1) afin de permettre le transport de lait des moyens de réception de trayon (2) à l'élément de collecte de lait (5), l'élément d'entrée de gaz comportant un canal de buse (22) et un passage (23), qui sont reliés l'un à l'autre à un raccordement intermédiaire commun (24) de telle manière que le passage (23) permet la communication avec l'atmosphère environnante et le canal de buse (22) permet la communication avec le conduit de transport de lait (1), **caractérisé en ce que** l'élément d'entrée de gaz comporte également un conduit supplémentaire (30), qui est relié au raccordement intermédiaire (24).

17. Élément raccord selon la revendication 16, **caractérisé en ce que** le conduit supplémentaire (30) est adapté pour permettre la communication entre le raccordement intermédiaire (24) et une source (31).

18. Élément raccord selon la revendication 17, **caractérisé en ce que** la source (31) est adaptée pour alimenter un fluide dans le raccordement intermédiaire (24) et ainsi dans le canal de buse (22).

19. Élément raccord selon l'une quelconque des revendications 16 à 18, **caractérisé en ce que** le raccordement intermédiaire (24) est formé par une cavité.

20. Dispositif d'élément raccord selon l'une quelconque des revendications 16 à 19, **caractérisé en ce que** l'élément d'entrée de gaz comporte un élément de filtre (25) situé dans le passage (23) pour filtrer l'air entrant de l'atmosphère environnante.

21. Élément raccord selon les revendications 17 et 20, **caractérisé en ce que** la source (31) est adaptée pour alimenter ledit fluide dans le raccordement intermédiaire (24) et ainsi dans le passage (23) et à travers l'élément de filtre (25).

22. Élément raccord selon les revendications 18 et 21, **caractérisé en ce que** la source (31) est adaptée pour alimenter ledit fluide de la source pendant un état de non traite pour nettoyer le canal de buse (22) et l'élément de filtre (25).

23. Élément raccord selon l'une quelconque des revendications 20 à 22, **caractérisé en ce que** le canal de buse (22) présente une première section de passage et le passage (23) à travers l'élément de filtre (25) présente une seconde section de passage totale, la première section de passage étant sensiblement plus petite que la seconde section de passage.

24. Élément raccord selon l'une quelconque des revendications 20 à 23, **caractérisé en ce que** le passage (23) est défini par une paroi et **en ce que** l'élément de filtre (25) comporte un corps (40, 42) présentant une paroi extérieure adaptée pour appuyer contre la paroi du passage (23), des canaux de filtre étant formés par une pluralité de fines rainures (44, 51) dans au moins soit la paroi du passage (23) soit la paroi extérieure.

25. Élément raccord selon la revendication 24, **caractérisé en ce que** la paroi du passage (23) diverge le long d'un axe central (x) du passage du raccordement intermédiaire (24) au milieu environnant.

26. Élément raccord selon l'une quelconque des revendications 24 et 25, **caractérisé en ce que** le corps (40, 42) est formé par un anneau élastique (42) prévu pour être partiellement en prise dans le passage (23), les canaux de filtre étant formés par une pluralité de fines rainures (51) dans la paroi du passage (23).

27. Élément raccord selon la revendication 26, **caractérisé en ce que** l'anneau élastique (42) s'étend autour de l'élément raccord (7).

28. Élément raccord selon la revendication 27, **caractérisé en ce que** l'anneau élastique (42) est situé dans une rainure périphérique (43, 50) s'étendant autour d'essentiellement toute la périphérie de l'élément raccord (7).
